# EUROPÄISCHE PATENTSCHRIFT

(11) **EP 0 358 919 B1**
(45) Veröffentlichungstag und Bekanntmachung des Hinweises auf die Patenterteilung: **19.01.1994**
(21) Anmeldenummer: 89114291.1
(22) Anmeldetag: 02.08.1989
(51) Int. Cl.: B01D 46/12, B01D 39/20, B22F 3/00

(54) **Vorrichtung für Heizungs- oder Verbrennungsanlagen**
Device for heating or combustion installations
Dispositif pour des installations de chauffage ou de combustion

(30) Priorität: 20.08.1988 DE 3828347
(43) Veröffentlichungstag der Anmeldung: 21.03.1990
(73) Patentinhaber: Schwäbische Hüttenwerke Gesellschaft mit beschränkter Haftung, D-73414 Aalen (DE)
(72) Erfinder: Härle, Hans A., Dipl.-Ing., D-7085 Bopfingen (DE)
(74) Vertreter: Lorenz, Werner, Dipl.-Ing.

(56) Entgegenhaltungen:
- DE-A- 2 019 732
- FR-A- 2 061 933
- US-A- 3 127 668
- US-A- 3 984 044
- US-A- 4 687 579

## Beschreibung

Die Erfindung betrifft ein Mischteil eines Brenners für Heizungs- oder Verbrennungsanlagen.

Für eine gute Wirksamkeit einer Heizanlage ist unter anderem auch die Brennereinrichtung und dessen Wirksamkeit selbst verantwortlich. Je intensiver und besser die Vermischung des Brennstoffes mit Luft erfolgt, desto besser wird die Verbrennung und desto niedriger sind schädliche Abgase.

Der vorliegenden Erfindung liegt daher die Aufgabe zugrunde, ein Mischteil der eingangs erwähnten Art zu schaffen, das bei vertretbarem Aufwand den Wirkungsgrad einer Heizungs- oder Verbrennungsanlage verbessert und das den Anteil an schädlichen Abgasen reduziert.

Erfindungsgemäß wird diese Aufgabe durch die im kennzeichnenden Teil von Anspruch 1 genannten Merkmale gelöst.

In überraschender Weise hat man nämlich festgestellt, daß der erfindungsgemäße Sinterkörper als Mischteil bei Heizungs- und Verbrennungsanlagen auf mehrere Weise optimal geeignet ist. Hauptursache hierfür ist seine große Porosität und damit seine hohe Gas- und eventuell auch Flüssigkeitsdurchlässigkeit die gegebenenfalls durch Bohrungen, Kanäle oder dergleichen noch erhöht werden kann.

Die hohe Wärmeleitfähigkeit des Sinterkörpers mit den gut wärmeleitfähigen metallischen Sinterteilen, wobei gegebenenfalls noch eine katalytische Wirkung hinzukommt, wirkt sich ebenfalls positiv auf den Wirkungsgrad aus.

Es ist lediglich dafür zu sorgen, daß als Material für den herzustellenden Sinterkörper Werkstoffe mit entsprechend hohen Schmelzpunkten, d.h. entsprechend hitzebeständige Materialien verwendet werden. Ebenso ist die Sinterung bzw. die Formpreßung vor dem Sintern so vorzunehmen, daß keine zu hohe Verdichtung eintritt, damit ein entsprechender Gasdurchlaß gewährleistet ist. Durch eine entsprechende Wahl des Preßdruckes und der Art und Größe der zu sinternden Teile läßt sich jedoch hier eine Einstellung in einem weiteren Bereich erreichen.

Neben der guten Wirksamkeit ist der Aufwand für die Herstellung und die Kosten des erfindungsgemäßen Sinterkörper nicht besonders hoch. Hinzu kommt, daß neben der hohen Unempfindlichkeit und damit guten Haltbarkeit des Sinterkörpers aus Sinterteilen sich ein derartiger Sinterkörper praktisch in beliebige Formen pressen und anschließend sintern läßt. Dies bedeutet, daß der Filter stets optimal an die vorhandenen Platzverhältnisse oder sonstigen Gegebenheiten angepaßt werden kann.

Der erfindungsgemäße Sinterkörper läßt sich auch zum Vergasen von flüssigen Brennstoffen, wie z.B. Heizöl verwenden, wodurch auf einfache Weise die Wirksamkeit eines Brenners erhöht werden kann. Hierzu ist es lediglich erforderlich, durch den entsprechend erhitzten Sinterkörper, und zwar durch seine Poren oder durch Öffnungen, den flüssigen Brennstoff durchzuleiten, wobei er vergast wird. Wird gleichzeitig noch Luft zugegeben, so erhält man ein entsprechend hochzündfähiges Gemisch. Der Vergasungseffekt wird dabei noch durch die hohe Oberfläche des Sinterkörpers verbessert. Aufgrund der Porosität wird auch eine gute Verwirbelung bzw. Durchmischung von Luft mit dem Brennstoff erreicht, was ebenfalls die Wirksamkeit der Verbrennung erhöht. Ebenso kann auch der für die Verbrennung erforderliche Sauerstoff bzw. Luft durch Bohrungen oder Kanäle dem Sinterkörper zugeführt werden.

Durch die Herstellung des Sinterkörpers aus Metalldrahtstücken oder Metallspänen wird ein Teil mit sehr geringer Dichte bei hoher Werkstoffestigkeit geschaffen. Dies bedeutet, daß auf diese Weise hergestellte Sinterteile eine hohe Aufnahmefähigkeit für Infiltrationen bzw. für eine Durchströmung besitzen, womit sie für den vorgesehenen Anwendungsfall sehr gut geeignet sind.

Die verwendeten Metalldrahtstücke oder Metallspäne können Durchmesser bzw. Breiten von 0,1 - 5 mm und Längen von ca. 0,5 - 30 mm, vorzugsweise von 1 - 3 mm bzw. von 2 - 10 mm besitzen. Selbstverständlich sind im Rahmen der Erfindung jedoch auch noch andere Maße in Abhängigkeit vom Anwendungsfall möglich.

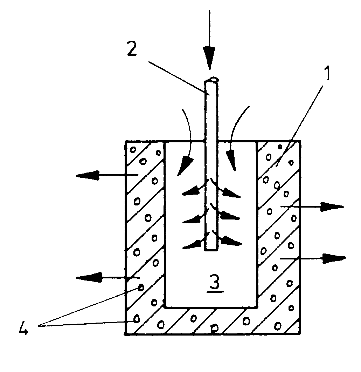

Nachfolgend ist ein Ausführungsbeispiel der Erfindung anhand der Zeichnung, die den erfindungsgemäßen Sinterkörper als Mischteil zeigt, prinzipmäßig näher beschrieben.

Ein Sinterkörper 1 weist eine Topfform auf, wobei in dessen Innenraum eine Zufuhrleitung 2 für einen flüssigen oder gasförmigen Brennstoff ragt. Die Zufuhrleitung 2 ist am Umfang mit Austrittsöffnungen versehen, über die der Brennstoff austritt und in Richtung auf die innere Umfangswand des als Mischteil wirkenden Sinterkörpers 1 strömt. Zusätzlich wird Luft entweder in den freien Innenraum 3 des Mischteiles bzw. Sinterkörpers eingeleitet (siehe Pfeile) oder direkt in Bohrungen in den Wänden des Sinterkörpers 1. An den Oberflächen des Mischteiles bzw. Sinterkörpers 1 und in den Poren und/oder Bohrungen 4 findet während des Durchganges von innen nach außen eine innige Durchmischung und Verwirbelung von Brennstoff und Luft statt. Wird das Mischteil bzw. der Sinterkörper 1 entsprechend dabei erwärmt, z.B. aufgrund der Verbrennung selbst oder durch eine Abgasrückführung, wird ein flüssiger Brennstoff entsprechend gleichzeitig auch vergast.

## Patentansprüche

1. Mischteil eines Brenners für Heizungs- oder Verbrennungsanlagen,
**gekennzeichnet durch**
einen formgepreßten hochtemperaturbeständigen Sinterkörper (1), wobei der Sinterkörper aus Metalldrahtstücken oder Metallspänen gebildet ist, die formgepreßt und nach dem Formen gesintert sind und wobei der Sinterkörper (1) eine Vielzahl von großen Poren (4) aufweist, die so bemessen sind, daß eine innige Durchmischung und Verwirbelung von Brennstoff und Luft stattfinden kann.

2. Mischteil nach Anspruch 1,
**dadurch gekennzeichnet,** daß der Sinterkörper (1) eine Topfform aufweist, in dessen Innenraum eine Zufuhrleitung (2) für flüssigen oder gasförmigen Brennstoff ragt.

3. Mischteil nach Anspruch 2,
**dadurch gekennzeichnet,** daß die Zufuhrleitung (2) mit in Richtung auf die innere Umfangswand des Mischteiles gerichteten Austrittsöffnungen versehen ist.

4. Mischteil nach einem der Ansprüche 1 bis 3,
**dadurch gekennzeichnet,** daß die Metalldrahtstücke oder Metallspäne Durchmesser bzw. Breiten von 0,1 - 5 mm und Längen von circa 0,5 - 30 mm besitzen.

5. Mischteil nach einem der Ansprüche 1 bis 4,
**dadurch gekennzeichnet,** daß der Sinterkörper (1) mit Bohrungen zur Luftzuführung versehen ist.

## Claims

1. Mixing component for a burner for heating or combustion installations, characterised by a compression-moulded high-temperature-resistant sintered body (1), the sintered body being formed from metal wire pieces or metal chips which are compression-moulded and then sintered after moulding and the sintered body (1) having a plurality of large pores (4) which are dimensioned in such a manner that thorough mixing and swirling of fuel and air can take place.

2. Mixing component according to claim 1, characterised in that the sintered body (1) is in the shape of a pot, into the interior of which a supply line (2) for liquid or gaseous fuel projects.

3. Mixing component according to claim 2, characterised in that the supply line (2) is provided with outlet openings pointing in the direction of the inner circumferential wall of the mixing component.

4. Mixing component according to one of claims 1 to 3, characterised in that the metal wire pieces or metal chips have diameters or widths of 0.1 - 5 mm and lengths of approximately 0.5 - 30 mm.

5. Mixing component according to one of claims 1 to 4, characterised in that the sintered body (1) is provided with bores for the supply of air.

## Revendications

1. Elément mélangeur d'un brûleur pour installations de chauffage ou d'incinération, **caractérisé** par un corps fritté réfractaire (1) formé à la presse, dans lequel le corps fritté est fait de morceaux de fils métalliques ou de copeaux métalliques qui sont formés à la presse et fritté après le formage, et dans lequel le corps fritté (1) comporte une multitude de gros pores (4) agencés de telle façon que du combustible et de l'air peuvent se mélanger et tourbillonner à l'intérieur.

2. Elément mélangeur selon la revendication 1, **caractérisé** en ce que le corps fritté (1) a une forme de pot à l'intérieur duquel s'étend une conduite d'amenée (2) pour du combustible liquide ou gazeux.

3. Elément mélangeur selon la revendication 2, **caractérisé** en ce que la conduite d'amenée (2) est pourvue d'orifices de sortie en direction de la paroi périphérique intérieure de l'élément mélangeur.

4. Elément mélangeur selon l'une des revendications 1 à 3, **caractérisé** en ce que les morceaux de fils métalliques ou copeaux métalliques ont des diamètres ou largeurs de 0,1 à 5 mm et des longueurs d'environ 0,5 à 30 mm.

5. Elément mélangeur selon l'une des revendications 1 à 4, **caractérisé** en ce que le corps fritté (1) est pourvu d'alésages pour l'amenée d'air.
